# EUROPÄISCHE PATENTANMELDUNG

(11) **EP 2 757 246 A2**
(43) Veröffentlichungstag der Anmeldung: **23.07.2014**
(21) Anmeldenummer: 14151312.7
(22) Anmeldetag: 15.01.2014
(51) Int. Cl.: F02M 59/46, F02M 59/36, F02M 51/06, F16K 31/06

(54) **Hochdruckventil**

(30) Priorität: 16.01.2013 DE 102013100440
(71) Anmelder: Kendrion (Villingen) GmbH, 78048 Villingen-Schwenningen (DE)
(72) Erfinder: Zelano, Frank, 78112 St. Georgen (DE); Brandenburg, Holger, 78048 Villingen-Schwenningen (DE)
(74) Vertreter: Patentanwälte Westphal, Mussgnug & Partner

(57) **Zusammenfassung**

Elektromagnetisch betätigbares Hochdruckventil (1) mit einem in einer Ventilkammer (9) angeordneten durch ein Dichtelement (2) verschließbaren Ventilsitz (5), der zwischen einer Niederdruckseite (N) und einer Hochdruckseite (H) des Ventils angeordnet ist, wobei das Dichtelement (2) zwischen einer Offen- und einer Geschlossenstellung bewegbar angeordnet ist, einem bewegbar angeordneten Anker (10) und einer bestrombaren Spule (31), die geeignet ausgebildet und angeordnet ist, auf den Anker zu wirken, wobei der Anker (10) und das Dichtelement (2) in der Ventilkammer (9) angeordnet sind.

## Beschreibung

Die vorliegende Erfindung betrifft ein elektromagnetisch betätigbares Hochdruckventil gemäß dem Oberbegriff des Patentanspruchs 1.

Aus dem Stand der Technik sind verschiedene elektromagnetisch betätigbare Hochdruckventile mit einem durch ein Dichtelement verschließbaren Ventilsitz, der zwischen einer Niederdruckseite und einer Hochdruckseite des Ventils angeordnet ist, wobei das Dichtelement zwischen einer Offen- und einer Geschlossenstellung bewegbar angeordnet ist, einem bewegbar angeordneten Anker und einer bestrombaren Spule, die geeignet ausgebildet und angeordnet ist, auf den Anker zu wirken bekannt. Derartige Ventile werden beispielsweise als Hochdruckventile zur Regelung des Raildruckes bei der Common-Rail-Technologie für Benzindirekteinspritzung verwendet. In diesem Einsatzgebiet ist das Hochdruckventil zwischen einer Kraftstoffversorgungsleitung und einer Hochdruckpumpe, die den in der Rail herrschenden Hochdruck von beispielsweise 280 bar erzeugt angeordnet und regelt den Zufluss von Treibstoff in die Hochdruckpumpe sowie den Aufbau des Druckes in der Hochdruckpumpe, der dann in die Rail überführt wird.

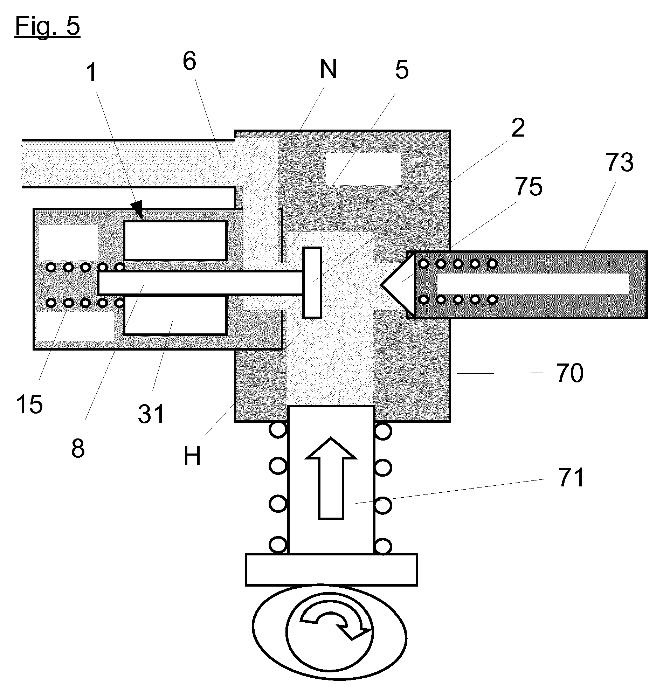

Ein Prinzipschaltbild des aus dem Stand der Technik bekannten Systems sowie der prinzipielle Aufbau des dort eingesetzten Hochdruckventils ist in Figur 5 dargestellt.

Figur 5 zeigt ein Hochdruckventil 1 mit einer Niederdruckseite N einer Hochdruckseite H, wobei zwischen der Niederdruckseite N und der Hochdruckseite H ein durch ein Dichtelement 2 verschließbare Ventilsitz 5 angeordnet ist. Die Niederdruckseite N des Hochdruckventils 1 ist mit einer Zuflussleitung 6 verbunden über die von einer Niederdruckpumpe geförderter Kraftstoff zur Verfügung gestellt wird. Die Hochdruckseite H des Hochdruckventils 1 ist mit dem Zylinder einer Hochdruckpumpe 70 verbunden, wobei durch einen Kolben 71 bei verschlossenem Ventilsitz 5 der Druckaufbau und die Förderung des im Zylinder befindlichen Kraftstoffs in Richtung Rail 73 erfolgt. Zwischen Rail 73 und dem Zylinder ist ein Rückschlagventil 75 angeordnet, das ein Rückströmen des Hochdruckmediums aus der Rail 73 in das Zylindervolumen der Hochdruckpumpe 70 verhindert.

Das Dichtelement 2 des Hochdruckventils 1 gemäß dem Stand der Technik ist über einen Stößel 8 mit einem Anker verbunden und durch Bestromung einer Spule 31, die auf den Anker wirkt, bewegbar. Das Hochdruckventil 1 gemäß dem Stand der Technik ist durch eine Schraubenfeder 15, die im Bereich des Ankers angeordnet ist, als normal geöffnetes Ventil ausgebildet, sodass ein Druckaufbau durch die Hochdruckpumpe 70 nur erfolgt, wenn das Hochdruckventil 1 geschlossen ist, d. h. das Dichtelement 2 den Ventilsitz 5 derartig dicht verschließt, dass das Hochdruckmedium nicht zurück in Richtung Zuflussleitung 6, sondern unter Überwindung des durch den Hochdruck in der Rail 73 sowie durch zusätzliche Federunterstützung geschlossenen Rückschlagventils 75 in die Rail 73 gefördert wird.

An den aus dem Stand der Technik bekannten Hochdruckventilen wird es als nachteilig empfunden, dass eine hochpräzise Lagerung von Anker, Kolben und Dichtelement notwendig ist, um eine ausreichende Dichtigkeit des Hochdruckventils zu gewährleisten. Solche hochpräzisen Lagerungen sind aufwändig und verteuern damit die Herstellung der Ventile.

Es ist die Aufgabe der vorliegenden Erfindung ein aus dem Stand der Technik bekanntes Hochdruckventil weiterzubilden und ein Hochdruckventil mit verbesserten Eigenschaften zur Verfügung zu stellen.

Diese Aufgabe wird durch ein Hochdruckventil mit den Merkmalen des Patentanspruchs 1 gelöst.

Vorteilhafte Weiterbildungen sind Gegenstand von Unteransprüchen.

Ein erfindungsgemäßes Hochdruckventil ist bevorzugt elektromagnetisch betätigt und weist einen durch ein plattenförmiges Dichtelement verschließbaren Ventilsitz, der in einer Ventilkammer zwischen einer Niederdruckseite und einer Hochdruckseite des Ventils angeordnet ist auf, wobei das Dichtelement zwischen einer Offen- und einer Geschlossenstellung bewegbar angeordnet ist, einen bewegbar angeordneten Anker und eine bestrombare Spule, die geeignet ausgebildet und angeordnet ist, um auf den Anker zu wirken vorgesehen, wobei das Dichtelement und der Anker beide in der Ventilkammer angeordnet sind. Der Anker ist ferner bevorzugt als Flachanker ausgebildet, der insbesondere von dem Dichtelement entkoppelt sein kann.

Als plattenförmige Dichtelemente werden in Sachen der vorliegenden Erfindung insbesondere Dichtelemente verstanden, deren Ausdehnung in einer Richtung zu einer Ventilöffnung größer als in Richtung der Ventilöffnung ist. Diese können dabei aber insbesondere gestellt, teilweise durchbrochen oder anderswie ausgeformt sein.

Durch eine erfindungsgemäße Anordnung von Anker und Dichtelement in der Ventilkammer kann auf im Stand der Technik notwendige hochpräzise Lagerungen verzichtet werden, so dass eine deutlich günstigere Herstellung des Hochdruckventils möglich ist.

Der Anker und das Dichtelement können dabei durch Druckfedern derart gelagert sein, dass ein normal offenes Ventil erzielt wird. Ein Schließen des Ventils wird bei Bestromung der Spule durch eine auf das Dichtelement wirkende Druckfeder sowie der von der Hochdruckseite wirkenden Mediumsdruck erreicht. In einer Weiterbildung der Erfindung sind der Anker und das Dichtelement einstückig als Ventilplatte ausgebildet.

Gemäß der vorliegenden Weiterbildung sind der Anker und das Dichtelement einstückig als Ventilplatte ausgebildet und bevorzugt auf der Hochdruckseite des Hochdruckventils angeordnet. Durch eine einstückige Ausbildung des Ankers und des Dichtelements als Ventilplatte und Vereinigung der Funktionalitäten von Anker und Dichtelement können Bauteile eingespart und insbesondere hochpräzise Lagerungen, wie sie im Stand der Technik notwendig sind, vermieden werden. Gemäß der vorliegenden Weiterbildung wird der magnetische Kreis zum Schließen des Hochdruckventils unmittelbar über die Ventilplatte geführt und diese durch die von der Spule erzeugte magnetische Kraft auf den Ventilsitz gezogen. Die Ventilplatte vereinigt bevorzugt einstückig Anker und Dichtelement und ist bevorzugt einstückig Anker und Dichtelement und ist bevorzugt vollständig aus einem magnetischen Material gefertigt.

Um einen Durchfluss eines durch das Ventil geleiteten Mediums, beispielsweise eines Kraftstoffs zu erleichtern und um die auf Grund dieses Durchflusses auf den Anker bzw. die Ventilplatte wirkenden Kräfte sowie durch ein Umfließen des Ankers bzw. der Ventilplatte erzeugte Verwirbelungen zu reduzieren weist der Anker bzw. die Ventilplatte bevorzugt wenigstens einen Durchbruch oder weiter bevorzugt Bohrungen auf. Es können beispielsweise zwei oder vier Bohrungen vorgesehen sein, die bevorzugt äquidistant und auf einer Kreislinie liegend an dem bevorzugt kreisförmig ausgebildeten Anker bzw. der bevorzugt kreisförmig ausgebildeten Ventilplatte angeordnet sind. Um ein zuverlässiges Schließen des Hochdruckventils zu gewährleisten sind die Bohrungen bevorzugt in einer Draufsicht auf den Ventilsitz in Richtung einer Ventilbohrung auf einer Kreislinie liegend und den Ventilsitz umgebend angeordnet, d. h., dass die Bohrungen derart ausgestaltet sind, dass das Dichtelement den Ventilsitz nach wie vor zuverlässig abdichtend verschließen kann.

Zwischen einer Spulenkammer, in der die bestrombare Spule zur Betätigung des Ventils angeordnet ist, und einer Ventilkammer, durch die das Medium fließt, ist eine nichtmagnetische, bevorzugt ringförmig ausgebildete Dichtung angeordnet, die die Spulen zuverlässig gegen Medium abdichten. Die Dichtung ist bevorzugt als Metalldichtung ausgebildet, sodass eine besonders stabile Anordnung erreicht wird.

Um eine normal offene Stellung des Hochdruckventils zu gewährleisten, ist bevorzugt wenigstens eine Feder vorgesehen, die die Ventilplatte in unbestromtem Zustand der Spule in der Offenstellung hält.

Die Feder kann beispielsweise als Druckfeder, insbesondere als Schraubenfeder ausgebildet sein, die beispielsweise einenends an der Ventilplatte und anderenends an der Metalldichtung abgestützt ist.

Durch eine Abstützung der Schraubenfeder einerseits an der Ventilplatte und andererseits an der Metalldichtung, die beispielsweise plattenförmig ausgebildet sein kann, wird eine zuverlässige Lagerung der Druckfeder erreicht. Es ist dabei allerdings notwendig, dass die zwischen der Ventilkammer und der Spulenkammer angeordnete Dichtung nicht nur druckdicht, sondern auch mechanisch stabil ausgeführt ist, sodass die bei Schaltvorgängen über die Feder einwirkenden Kräfte aufgenommen werden können. In einer alternativen Ausgestaltung des erfindungsgemäßen Hochdruckventils kann die eine normal offene Stellung des Ventils bewirkende Feder auch als Zugfeder ausgebildet sein. Eine solche Zugfeder kann beispielsweise als wenigstens eine Blattfeder realisiert werden. Vorzugsweise werden jedoch wenigstens zwei Blattfedern vorgesehen, die einenends an der Ventilplatte und anderenends an einem, den Übergang zur Hochdruckseite bildenden Übergangselement angeordnet bzw. gelagert sind. Solche Blattfedern können beispielsweise als streifenförmige Federelemente ausgebildet sein, die in einer Draufsicht in Richtung der Ventilbohrung quer zu einem Radius der Ventilplatte verlaufend angeordnet sind.

Um eine Verwendung des erfindungsgemäßen Hochdruckventils auch im Bereich der Benzindirekteinspritzung oder in Bereichen mit anderen korrosiven Medien zu ermöglichen, sind die in Mediumskontakt stehenden Bauteile des Hochdruckventils aus vorzugsweise gehärtetem Edelstahl gefertigt.

Eine besonders kompakte Bauweise für das Hochdruckventil sowie eine günstige Konfiguration zur Abdichtung kann erreicht werden, wenn eine Mediumszuführung von der Niederdruckseite her über einen innerhalb der Spule verlaufenden Kanal erfolgt, d. h. das Medium durch den von der Spule gebildeten Elektromagneten hindurchgeführt wird.

Um in dieser Konfiguration eine optimale Führung des von der Spule erzeugten Magnetfelds gewährleisten zu können, ist es sinnvoll, wenn der zur Mediumsführung vorgesehene Kanal als Innenpol zur Führung des Magnetfeldes ausgebildet ist. Eine Zuführung des Mediums erfolgt damit bevorzugt über einen Kanal bzw. ein Rohr aus einem magnetischen Material.

Um im rückseitigen Bereich des Hochdruckventils, d. h. an einem der Hochdruckseite abgewandten Ende der Spule eine optimale Führung des Magnetfelds zu erreichen, kann dort eine sogenannte Abschlussplatte vorgesehen sein. Dies ist derart ausgebildet, dass ein von der Spule erzeugtes Magnetfeld in Richtung des im Inneren der Spule verlaufenden Kanals gelenkt und damit eine möglichst kurzer und verlustfreie magnetischer Kreis erzeugt wird.

Die vorliegende Erfindung wird nachfolgend anhand zweier Ausführungsbeispiele unter Bezugnahme auf die beigefügten Figuren eingehend erläutert.
- Fig. 1: erstes Ausführungsbeispiel eines erfindungsgemäßen Hochdruckventils,
- Fig. 2: eine Ausschnittsvergrößerung im Bereich des Ventilsitzes aus Figur 1,
- Fig. 3: eine Ausschnittsvergrößerung des Bereichs des Ventilsitzes eines zweiten Ausführungsbeispiels,
- Fig. 4: ein drittes Ausführungsbeispiel eines erfindungsgemäßen Hochdruckventils und
- Fig. 5: eine Prinzipsskizze eines aus dem Stand der Technik bekannten Hochdruckventils sowie dessen Einsatz bei einer Hochdruckpumpe im Common-Rail-Bereich (schon behandelt).

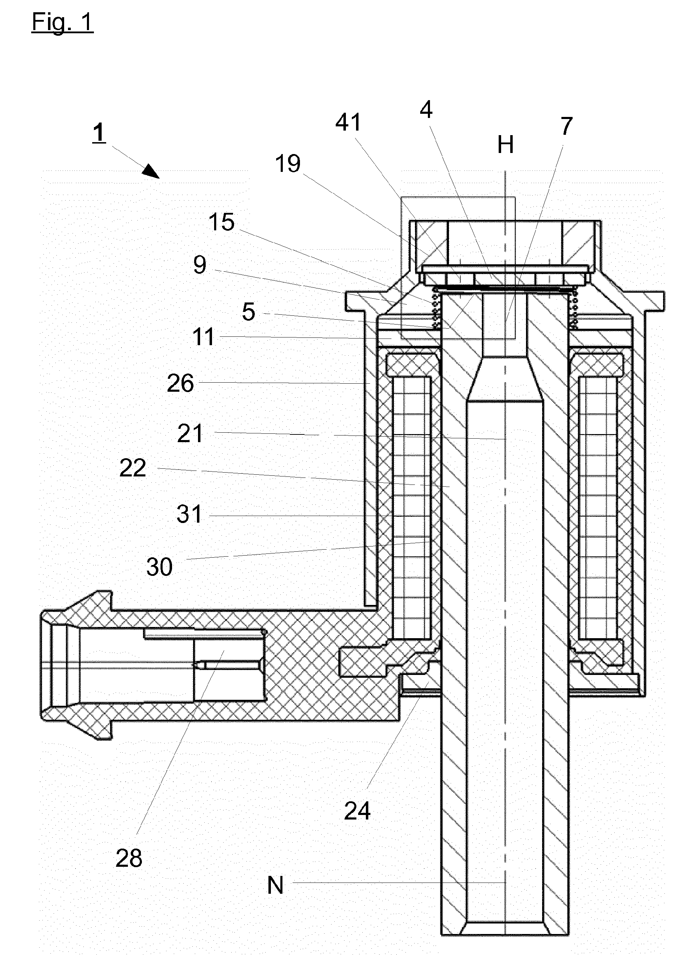

Figur 1 zeigt ein erstes Ausführungsbeispiel eines Hochdruckventils 1 gemäß der vorliegenden Erfindung.

Das Hochdruckventil 1 weist als zentrales Element eine Ventilplatte 4 auf, die geeignet angeordnet ist, einen unterhalb der Ventilplatte 4 angeordneten Ventilsitz 5 dichtend zu verschließen. Eine Betätigung der Ventilplatte 4, die bei dem dargestellten Hochdruckventil 1 einen magnetisch betätigbaren Anker sowie ein Dichtelement in einem Element vereinigt ist aus einem magnetisch leitenden Material gefertigt und kann somit durch Bestromung einer Spule 31, die auf einem Spulenträger 30 angeordnet ist, erfolgen.

Eine Bestromung der Spule 31 und damit ein Schalten des Ventils wird über Anschlussbuchse 28 erreicht, die im vorliegenden Ausführungsbeispiel am von der Hochdruckseite H abgewandten Ende der Spule 31 radial abgehend vorgesehen ist.

Zur Leitung des magnetischen Flusses innerhalb des Hochdruckventils 1 sowie zur Zuleitung eines Mediums von einer Niederdruckseite N her, ist ein Kanal 21 der in einem Innenpol 22 angeordnet ist von der Niederdruckseite N her in Richtung des Ventilsitzes 5 geführt. Der Innenpol 22, in dem der Kanal 21 angeordnet ist, ist dabei aus einem magnetisch leitenden Material gefertigt und somit zur Führung des magnetischen Flusses innerhalb des Hochdruckventils 1 geeignet ausgebildet. Um den magnetischen Fluss an einem von dem Ventilsitz 5 abgewandt angeordneten Ende der Spule 31 optimal zu führen ist eine Abschlussplatte 24 vorgesehen, die quer zu dem Innenpol 22 angeordnet ist und damit gleichzeitig ein Gehäuse 26 des Hochdrucksventils 1 rückseitig verschließt. Vorderseitig ist die in einem Spulenraum angeordnete Spule 31 über eine zwischen dem Gehäuse 26 und dem Innenpol 22 verlaufende umlaufende plattenförmige Dichtung 11 aus metallischem nicht magnetischem Material abgedichtet. Die Metalldichtung 11 unterteilt damit einen Innenraum des Gehäuses 26 in die Spulenkammer sowie eine von Medium durchflossene Ventilkammer 9. In der Ventilkammer 9 ist die Ventilplatte 4 sowie eine auf die Ventilplatte 4 wirkende Druckfeder 15 angeordnet.

Die Druckfeder 15 ist im vorliegenden Ausführungsbeispiel als Schraubenfeder ausgebildet, die einenends an der Ventilplatte 4 und anderenends an der umlaufenden Metalldichtung 11 abgestützt ist, ausgebildet.

Um einen ungehinderten Durchfluss von Medium durch die Ventilkammer 9 in Richtung Hochdruckseite H des Hochdruckventils 1 zu gewährleisten, weist die Dichtplatte 4 im vorliegenden Ausführungsbeispiel vier Bohrungen 41 auf, die auf einer Kreislinie den Ventilsitz 5 umgebend angeordnet sind. Die Bohrungen 41 sind dabei so angeordnet, dass die Ventilplatte 4, die vorliegend kreisrund ausgebildet ist, in einem zentralen Bereich eine geschlossene Fläche zum abdichtenden Verschließen des Ventilsitzes 5 aufweist.

Ein Gegenlager der Ventilplatte in geöffneten Zustand bildet ein Übergangselement 19, dass einen Übergang von der Ventilkammer 9 zum Hochdruckbereich H in dem, beispielsweise bei einer Common-Rail Anwendung eine Hochdruckpumpe angeordnet ist, bildet.

Das vorliegend dargestellte Hochdruckventil 1 ist als normal offenes Ventil ausgebildet, wobei die als Schraubenfeder ausgebildete Druckfeder 15 derart dimensioniert ist, dass die Ventilplatte 4 in unbestromtem Zustand der Spule 31 in einer von dem Ventilsitz 5 abgehobenen Position gehalten wird. In dieser Stellung ist es beispielsweise bei einer Common-Rail Anwendung möglich, dass Medium aus der Hochdruckpumpe zurück auf die Niederdruckseite N des Hochdrucksventils 1 strömt. Auf diese Weise ist es möglich, den Druck in der Rail des Common-Rail-Systems zu regeln.

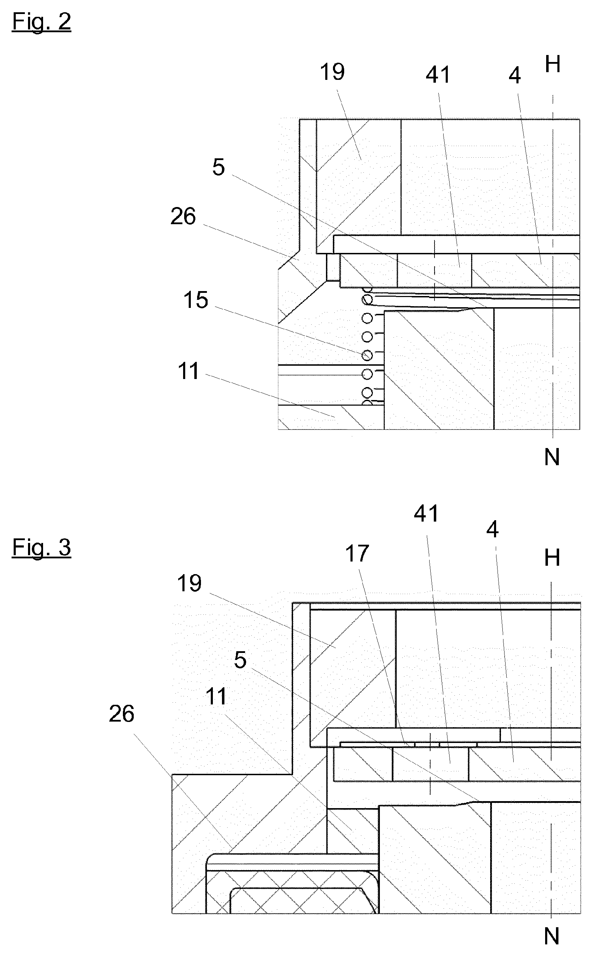

Figur 2 zeigt eine vergrößerte Darstellung des Ventilsitzes 5 sowie der Ventilplatte 4 wie diese in Figur 1 dargestellt sind. In Figur 2 ist besonders deutlich zu erkennen, dass die Ventilplatte 4 über eine als Schraubenfeder ausgeordnete Druckfeder 15 in Richtung der Hochdruckseite H beaufschlagt ist, so dass das Ventil als normal offenes Ventil ausgebildet ist. Bei unbestromter Spule 31, d. h. wenn kein Magnetfeld auf die Ventilplatte 4 wirkt, ist es damit allein durch den Druck des Mediums auf der Hochdruckseite H nicht möglich entgegen der Federkraft der Druckfeder 15 ein Schließen des Ventils herbeizuführen, so dass das von der Hochdruckpumpe verdrängte Medium durch die Bohrungen 41 zurück auf die Niederdruckseite N des Hochdruckventils 1 strömt. Ein Druckaufbau innerhalb der Hochdruckpumpe ist damit nicht möglich.

Wie in Figur 2 ersichtlich und bereits oben angesprochen ist die Druckfeder 15 einenends an der Ventilplatte 4 und anderenends an der umlaufenden Metalldichtung 11, die die Ventilkammer 9 von der Spulenkammer trennt, abgestützt. Die gezeigte Metalldichtung 11 ist aus einem nichtmagnetischen Material geformt und geeignet stabil ausgebildet, von der Ventilplatte 4 über die Druckfeder 15 übertragene Schwingungen und Stöße ausreichend aufzunehmen. Als Gegenlager der Ventilplatte 4 ist im vorliegenden Ausführungsbeispiel das Übergangselement 19 vorgesehen. Das Übergangselement 19 weist ein von der Ventilplatte in einer Geöffnet-Stellung leicht beabstandetes Widerlager auf, dass ein Abheben der Ventilplatte 4 aufgrund von durch die Öffnungen strömendem Medium verursachten Kräften in Richtung Hochdruckseite H verhindert.

In einer weiteren Ausgestaltungsform, die von ihrem grundsätzlichen Aufbau der Ausgestaltungsform aus Figur 1 gleicht, ist die Ventilplatte 4 über als Blattfedern 17 ausgebildete Zugfedern an dem Übergangselement 19 gelagert. In dieser Ausgestaltungsform ist eine im Vergleich zu der Ausgestaltungsform in Figur 2 kompaktere Bauweise im Bereich der Ventilkammer 9 möglich, da kein zusätzlicher Bauraum für eine Unterbringung der Druckfeder 15 benötigt wird. Es ist in dieser Ausgestaltungsform außerdem möglich, die Metalldichtung 11 bezogen auf mechanische Einflüsse, d. h. im vorliegenden Ausführungsbeispiel nicht bezogen auf Druckeinflüsse, schwächer zu gestalten, da eine Aufnahme von übertragenen Schwingungen oder Stößen nicht notwendig ist.

Im vorliegenden Ausführungsbeispiel sind zwei Blattfedern 17 vorgesehen, die einerseits am Umfang der kreisrund ausgestalteten Ventilplatte 4 und andererseits am Umfang des ebenfalls rotationssymmetrisch ausgestalteten Übergangselement 19 angeordnet sind. Die Blattfedern sind dafür entlang einer Sekante des in Draufsicht kreisrund ausgestalteten Übergangselements 19 verlaufend angeordnet, so dass eine Vertikalbewegung der Ventilplatte 4 und eine leichte Drehbewegung ohne eine Dehnung der Blattfedern 17 möglich ist.

Es sei in diesem Zusammenhang darauf hingewiesen, dass durch eine Vereinigung der Funktionen des Ankers und des Dichtelements in der Ventilplatte 4 gegenüber aus dem Stand der Technik bekannten Hochdruckventilen eine erhebliche Reduktion der bewegten Bauelemente sowie Vorteile hinsichtlich der zu ergreifenden Dichtungsmaßnahmen erzielt werden. Insbesondere ist zu erwähnen, dass keinerlei Abdichtungen am Umfang von bewegten Bauelementen notwendig sind, so dass die vorliegend beschriebenen Ventile annähernd leckagefrei ausgebildet werden können.

Sowohl der am Ende des Kanals 21 an dem Innenpol 22 ausgebildete Ventilsitz als auch die Ventilplatte 4 sind beide metallische und magnetisch leitende Bauelemente, so dass eine Abdichtung des Ventils durch eine Metall auf Metall Dichtung erfolgt. Die entsprechenden Bauelemente sind daher bevorzugt aus gehärtetem Material auszuführen.

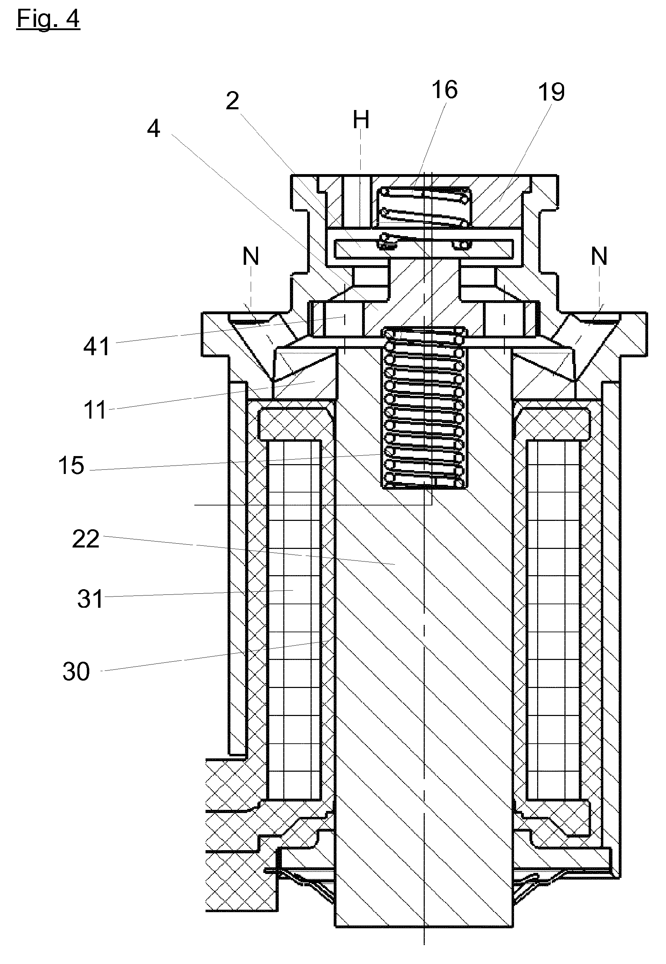

Figur 4 zeigt ein weiteres Ausführungsbeispiels eines Hochdruckventils 1, wobei im Unterschied zu den in den Figuren 1 bis 3 dargestellten Hochdruckventilen 1 die Hochdruckseite H und die Niederdruckseite N an einem gemeinsamen Ventilende angeordnet sind. Das Ventil hat damit den Vorteil, dass über eine Flansch-Verbindung sowohl eine Verbindung zur Hochdruckseite H als auch zur Niederdruckseite N hergestellt werden kann.

Die Anschlussbuchse 28 ist der Übersichtlichkeit halber nicht komplett dargestellt.

Entsprechend der in Figur 4 dargestellten Ausgestaltungsform ist eine Zuführung von der Niederdruckseite N her über eine radiale Mediumszuführung ausgestaltet, die im vorliegenden Beispiel über Bohrungen 32, die auf zwei gegenüberliegenden Seiten des Ventils in dem Gehäuse 26 vorgesehen sind, ausgestaltet ist. Der in den vorhergehenden Ausführungsbeispielen als Zuführungskanal 21 ausgestaltete Innenpol 22 kann damit als massives Bauelement ausgeführt werden und kann damit einen höheren magnetischen Fluss leiten.

Um eine optimale Leitung des von der Niederdruckseite N einströmenden Mediums zu erreichen, ist die umlaufende Metalldichtung 11 im Querschnitt trapezförmig und insgesamt als umlaufende, von der Spulenkammer sich in Richtung der Ventilkammer 9 erstreckende und konisch zulaufender Dichtungsring ausgebildet ist.

In dem in Figur 4 gezeigten Ausführungsbeispiel ist ein als Ankerplatte 10 ausgestalteter Flachanker vorgesehen, der zur Gewährleistung eines Mediumsdurchflusses mit Bohrungen 41, die wie zuvor beschrieben beispielsweise auf einer Kreislinie liegend angeordnet sind, versehen ist.

Die Ankerplatte 10 ist im vorliegenden Ausführungsbeispiel im Querschnitt T-förmig ausgebildet. Die Ankerplatte 10 ist so angeordnet, dass ein im wesentlichen tellerförmig ausgebildeter Abschnitt der Ankerplatte 10 in Richtung der Spulenkammer ausgerichtet ist und in einem zentralen Bereich einen im Wesentlichen zylindrischen Fortsatz aufweist, der sich in Richtung Dichtelement 2 erstreckt. Die Ankerplatte 10 ist im vorliegenden Ausführungsbeispiel separiert von einem Dichtelement 2, das in Richtung der Hochdruckseite H vorgesehen ist und einen umlaufend ausgeformten Dichtsitz 5 abdichtend verschließen kann, ausgebildet. Das Dichtelement 2 ist im vorliegenden Ausführungsbeispiel im Wesentlichen plattenförmig ausgebildet, kann aber auch gestuft ausgeformt sein um eine Distanz zwischen der Ankerplatte 10 und dem Dichtelement 2 zu überbrücken. Das Dichtelement 2 weist in einem zentralen Bereich in Richtung der Hochdruckseite H orientiert eine Vertiefung oder eine Ringnut auf, in der eine Lagerfeder 16 zur Vorspannung des Dichtelements 2 in Richtung des Dichtsitzes 5 vorgesehen ist. Die Lagerfeder 16 ist anderenends in einer Vertiefung des Übergangselementes 19 gelagert und sichert das Dichtelement so gegen unkontrollierte Bewegungen im Medumsstrom.

Die Ankerplatte 10 ihrerseits ist über eine Druckfeder 15, die beispielsweise an dem Innenpol 22 abgestützt sein kann, in Richtung der Hochdruckseite H vorgespannt, so dass durch eine entsprechende Abstimmung der Druckfeder 15 sowie der Lagerfeder 16 ein normal offenes Ventil erreicht wird. Zur Aufnahme der Druckfeder 15 ist an der Ankerplatte 10 ebenfalls eine Ringnut oder eine Vertiefung vorgesehen.

Durch eine Entkoppelung von Ankerplatte 10 und Dichtelement 2 können magnetische Kräfte in Kipprichtung, die bei einer einstückigen Ausgestaltung von Ankerplatte 10 und Dichtelement 2 auf das Dichtelement 2 übertragen werden können, vermieden werden. Das Dichtelment 2 ist im vorliegenden Ausführungsbeispiel bei einer Bestromung der Spule 31 und einem damit verbundenen Anziehen der Ankerplatte 10 in Richtung des Innenpols 22 alleine durch die Federkraft der Lagerfeder 16 sowie die durch ein Schließen des Ventils auf der Hochdruckseite H des Ventils entstehende Druckkraft geschlossen.

Durch eine Ausbildung des Ankers als Ankerplatte bzw. als Flachanker 10 sowie des Dichtelementes 2 ebenfalls als plattenförmiges Dichtelement 2 können die im Stand der Technik aufwändigen hochpräzisen Lagerungen ebenfalls vermieden und dadurch eine günstigere Herstellung des Hochdruckventils 1 erreicht werden.

### Bezugszeichenliste

- 1: Hochdruckventil
- 2: Dichtelement
- 3: Elektromagnet
- 4: Ventilplatte
- 5: Ventilsitz
- 6: Zuflussleitung
- 7: Ventilbohrung
- 8: Anker mit Stößel
- 9: Ventilkammer
- 10: Ankerplatte/Anker
- 11: Metalldichtung / Dichtung
- 13: Feder
- 15: Druckfeder
- 16: Lagerfeder
- 17: Blattfeder
- 19: Übergangselement
- 21: Kanal
- 22: Innenpol
- 24: Abschlussplatte
- 26: Gehäuse
- 28: Anschlusskontakt
- 30: Spulenträger
- 31: Spule
- 32: Bohrung

- 70: Hochdruckpumpe
- 71: Kolben
- 73: Rail
- 75: Rückschlagventil

- H: Hochdruckseite
- N: Niederdruckseite

## Patentansprüche

1. Elektromagnetisch betätigbares Hochdruckventil (1) mit einem in einer Ventilkammer (9) angeordneten durch ein Dichtelement (2) verschließbaren Ventilsitz (5),
der zwischen einer Niederdruckseite (N) und einer Hochdruckseite (H) des Ventils angeordnet ist, wobei das Dichtelement (2) zwischen einer Offen- und einer Geschlossenstellung bewegbar angeordnet ist, einem bewegbar angeordneten Anker (10) und einer bestrombaren Spule (31), die geeignet ausgebildet und angeordnet ist, auf den Anker zu wirken,
**dadurch gekennzeichnet, dass** der Anker (10) und das Dichtelement (2) in der Ventilkammer (9) angeordnet sind.

2. Hochdruckventil (1) nach Anspruch 1,
**dadurch gekennzeichnet, dass** der Anker (10) als Flachanker ausgebildet ist.

3. Hochdruckventil (1) nach einem der vorhergehenden Ansprüche,
**dadurch gekennzeichnet, dass** der Anker und das Dichtelement (2) als Ventilplatte (4) ausgebildet sind.

4. Hochdruckventil (1) nach einem der vorhergehenden Ansprüche,
**dadurch gekennzeichnet, dass** die Ventilplatte (4) vollständig aus einem magnetischen Material gefertigt ist.

5. Hochdruckventil (1) nach einem der vorhergehenden Ansprüche,
**dadurch gekennzeichnet, dass** die Ventilplatte (4) und/oder der Anker (10) wenigstens einen Durchbruch, bevorzugt Bohrungen für einen Mediumsdurchfluss aufweist.

6. Hochdruckventil (1) nach Anspruch 5,
**dadurch gekennzeichnet, dass** die Bohrungen in einer Draufsicht auf die Ventilplatte (4) 30 und den Ventilsitz (5) in Richtung einer Ventilbohrung (7) auf einer Kreislinie liegend und den Ventilsitz (5) umgebend angeordnet sind.

7. Hochdruckventil (1) nach einem der vorhergehenden Ansprüche,
**dadurch gekennzeichnet, dass** zwischen der Spule (31) und einer Ventilkammer (9) eine nicht magnetische bevorzugt ringförmig ausgebildete Dichtung, bevorzugt ein Metalldichtung (11) angeordnet ist.

8. Hochdruckventil (1) nach einem der vorhergehenden Ansprüche,
**dadurch gekennzeichnet, dass** wenigstens eine Feder (13) vorgesehen ist, die die Ventilplatte in unbestromtem Zustand der Spule (31) in der Offenstellung hält.

9. Hochdruckventil (1) nach Anspruch 8,
**dadurch gekennzeichnet, dass** die Feder (13) als Druckfeder, insbesondere als Schraubenfeder (15) ausgebildet ist.

10. Hochdruckventil (1) nach Anspruch 9,
**dadurch gekennzeichnet, dass** die Druckfeder einenends an der Ventilplatte (4) und anderenends an der Metalldichtung (11) abgestützt ist.

11. Hochdruckventil (1) nach Anspruch 8,
**dadurch gekennzeichnet, dass** die Feder (13) als Zugfeder ausgebildet ist.

12. Hochdruckventil (1) nach Anspruch 11,
**dadurch gekennzeichnet, dass** die Zugfeder als wenigstens eine Blattfeder (17) ausgebildet ist.

13. Hochdruckventil (1) nach Anspruch 12,
**dadurch gekennzeichnet, dass** die Blattfeder (17) oder die Blattfedern (17) einenends an der Ventilplatte (4)und anderenends an einem den Übergang zur Hochdruckseite H bildenden Übergangselement (19) angeordnet ist oder sind.

14. Hochdruckventil (1) nach Anspruch 12,
**dadurch gekennzeichnet, dass** zwei Blattfedern (17) vorgesehen sind, wobei die Blattfedern (17) bevorzugt als streifenförmige Federelemente ausgebildet sind, die in einer Draufsicht in Richtung der Ventilbohrung quer zu einem Radius der Ventilplatte (4) verlaufen.

15. Hochdruckventil (1) nach einem der vorhergehenden Ansprüche,
**dadurch gekennzeichnet, dass** die in Mediumskontakt stehenden Bauteile des Hochdruckventils (1) aus vorzugsweise gehärtetem Edelstahl gefertigt
sind.

16. Hochdruckventil (1) nach einem der vorhergehenden Ansprüche,
**dadurch gekennzeichnet, dass** eine Mediumszuführung von der Niederdruckseite N her über einen innerhalb der Spule (31) verlaufenden Kanal (21) erfolgt.

17. Hochdruckventil (1) nach Anspruch 16,
**dadurch gekennzeichnet, dass** der Kanal (21) als Innenpol (22) zur Führung des Magnetfeldes ausgebildet ist.

18. Hochdruckventil (1) nach einem der vorhergehenden Ansprüche,
**dadurch gekennzeichnet, dass** an einem der Hochdruckseite H abgewandten Ende der Spule (31) eine Abschlussplatte (24) zur Führung des Magnetfeldes vorgesehen ist.
